(19) Europäisches Patentamt
European Patent Office
Office européen des brevets

(11) EP 2 105 461 B1

(12) **EUROPEAN PATENT SPECIFICATION**

(45) Date of publication and mention of the grant of the patent:
**07.03.2012 Bulletin 2012/10**

(21) Application number: **08703309.8**

(22) Date of filing: **16.01.2008**

(51) Int Cl.:
***C08L 21/00*** *(2006.01)* ***B60C 1/00*** *(2006.01)*
***C08K 3/36*** *(2006.01)* ***C08K 5/548*** *(2006.01)*
***C08K 7/02*** *(2006.01)* ***C08J 9/00*** *(2006.01)*
***C08J 9/08*** *(2006.01)* ***B60C 11/14*** *(2006.01)*
*C08L 23/12 (2006.01)* *C08L 23/06 (2006.01)*

(86) International application number:
**PCT/JP2008/050448**

(87) International publication number:
**WO 2008/087987 (24.07.2008 Gazette 2008/30)**

(54) **RUBBER COMPOSITION AND PNEUMATIC TIRE USING THE SAME**

KAUTSCHUKZUSAMMENSETZUNG UND LUFTREIFEN DAMIT

COMPOSITION DE CAOUTCHOUC ET PNEUMATIQUE UTILISANT CELLE-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.01.2007 JP 2007008339**

(43) Date of publication of application:
**30.09.2009 Bulletin 2009/40**

(73) Proprietor: **Bridgestone Corporation**
**Tokyo 104-8340 (JP)**

(72) Inventor: **OTA, Toshiyuki**
**Kodaira-shi**
**Tokyo 187-8531 (JP)**

(74) Representative: **Whalley, Kevin et al**
**Marks & Clerk LLP**
**90 Long Acre**
**London WC2E 9RA (GB)**

(56) References cited:
**EP-A1- 1 048 691** **EP-A2- 0 771 836**
**WO-A1-2005/049493** **JP-A- 11 071 480**
**JP-A- 11 071 480** **JP-A- 2001 233 993**
**JP-A- 2003 201 371** **JP-A- 2003 201 371**
**JP-A- 2004 231 693** **JP-A- 2006 131 714**
**JP-A- 2006 131 714** **JP-A- 2006 232 916**
**JP-A- 2006 274 136**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 105 461 B1

## Description

### TECHNICAL FIELD

The present invention relates to a rubber composition and a pneumatic tire using the composition and, more particularly, to a rubber composition which exhibits excellent workability in processing the rubber and can provide a tire exhibiting excellent performance of braking and driving on road surfaces having ice and snow (excellent performance on ice) and excellent abrasion resistance and a pneumatic tire which is obtained by using the rubber composition for a tread and exhibits the performance described above.

### BACKGROUND ART

Since studded tires were prohibited, many studies for improving the performance of braking and driving on road surfaces having ice and snow (hereinafter, referred to as the performance on ice) and, in particular, many studies on the tread of a tire have been conducted. On road surfaces having ice and snow, water films tend to be formed due to the heat of friction between the road surface having ice and snow and the tire, and the formed water films decrease the friction coefficient between the tire and the road surface having ice and snow. Therefore, for improving the performance of a tire on ice, it is necessary that the function of the tread of the tire to remove the water films be improved, and the edge effect and the spike effect of the tread of the tire be enhanced.
To provide the function of removing the water films to the tread of a tire, many numbers of minute grooves for draining water (the depth and the width both of about 100 μm) are formed on the face of the tread which is brought into contact with road surfaces, and the water films are removed through the grooves to increase the friction coefficient between the tire and the road surface having ice and snow. However, a problem arises in this method in that the performance on ice gradually deteriorates as abrasion of the tire proceeds although the performance on ice can be improved in the initial period of the use of the tire. To prevent the deterioration in the performance on ice even when the tire is abraded, it is considered that cells of the air are formed in the tread so that the effect of removing minute water films can be exhibited. As the cells of the air in the tread, cylindrical cells formed by using fibers of an organic resin can be considered in addition to spherical cells.
It is proposed that the friction coefficient with the road surface having ice and snow is increased by adding fine particles to the organic fibers to further enhance the effect of scratching the road surface (for example, refer to Patent References 1 and 2).
The performance on ice can be improved due to the improvements in the effect of draining water and the effect of scratching when cylindrical cells are formed in the rubber composition with the fiber of an organic resin or cellular materials having an elongated shape and containing fine particles are added to the rubber composition. However, the simultaneous exhibition of the excellent abrasion resistance and the excellent performance on ice has not been sufficiently achieved.
As the rubber component used for the tread, natural rubber and high cis-polybutadiene which have glass transition temperatures of -60°C or lower are used. In particular, high cis-polybutadiene rubber has a low glass transition temperature, and the performance on ice is improved by increasing the relative amount of high cis-polybutadiene in the rubber component. However, a problem arises in that the performance on dry road surfaces is decreased when the relative amount of high cis-polybutadiene rubber is increased.
As the filler component used for the tread, carbon black and silica are mainly used. Silica is used as the component which can improve the performance on wet road surfaces and the fuel economy. When silica is used, in general, a silane coupling agent is used in combination with silica so that the reinforcing property as the filler and the property for dispersion in the rubber component are surely exhibited.
To improve the properties on dry road surfaces and the abrasion resistance described above as the problems, an increase in the amount of the reinforcing filler may be considered. However, it is inevitable that the performance on ice and the workability are decreased when the amount is simply increased.
[Patent Reference 1] Japanese Patent Application Laid-Open No. 2003-201371
[Patent Reference 2] Japanese Patent Application Laid-Open No. 2001-233993

Rubber compositions for tyres for use on ice and snow are also disclosed in:

JP11 071480
JP2003 201371
JP2006 131714
JP2006 274136

EP0771836
EP1048691

Under the above circumstances, the present invention has an object of providing a rubber composition which exhibits excellent workability in processing the rubber and can provide a tire exhibiting excellent performance of braking and driving on road surfaces having ice and snow (excellent performance on ice) and excellent abrasion resistance and a pneumatic tire which is obtained by using the rubber composition for a tread and exhibits the performance described above.
As the result of intensive studies by the present inventor to achieve the above object, it was found that the amount of the filler could be increased without decrease in the workability by using a rubber composition which had closed cells and was obtained by adding a specific silane coupling agent, silica and an organic fiber to a rubber component comprising natural rubber and a conjugated diene-based polymer, and the object of the present invention could be achieved. The present invention has been completed based on the knowledge.
The present invention provides:

(1) A rubber composition which has closed cells and comprises (A) at least one rubber component selected from natural rubber and diene-based synthetic rubbers, (B) silica in an amount of 10 to 150 parts by mass based on 100 parts by mass of the rubber component, (C) an organic fiber in an amount of 0.02 to 20 parts by mass based on 100 parts by mass of the rubber component and (D) a silane coupling agent represented by following general formula (I):

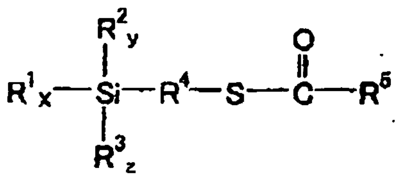 ··· (I)

wherein $R^1$ represents a group represented by $R^6O$-, $R^6C(=O)O$-, $R^6R^7C=NO$-, $R^6R^7NCO$-, $R^6R^7N$- or $-(OSiR^6R^7)_m(OSiR^5R^6R^7)$ ($R^6$ and $R^7$ each independently representing hydrogen atom or a monovalent hydrocarbon group having 1 to 18 carbon atoms, and m representing an integer of 0 to 10), $R^2$ represents an atom or a group represented by $R^1$, hydrogen atom or a monovalent hydrocarbon group having 1 to 18 carbon atoms, $R^3$ represents an atom or a group represented by $R^1$ or $R^2$ or a group represented by $-[O(R^8O)_aH]$ ($R^8$ representing an alkylene group having 1 to 18 carbon atoms, and a representing an integer of 1 to 4), $R^4$ represents a divalent hydrocarbon group having 1 to 18 carbon atoms, $R^5$ represents a monovalent hydrocarbon group having 1 to 18 carbon atoms, and x, y and z represent numbers satisfying relations of $x+y+z=3$, $0 \leqq x \leqq 3$, $0 \leqq y \leqq 2$ and $0 \leqq z \leqq 1$; in an amount of 1 to 30% by mass based on the amount by mass of silica of Component (B); wherein Component (C) is (F) a fine particle comprising organic fiber which comprises (E) fine particles;
(2) A rubber composition described in (1), wherein Component (F) comprises Component (E) in an amount of 5 to 90 parts by mass based on 100 parts by mass of a raw material constituting Component (C);
(3) A rubber composition described in (1), wherein the fiber used for Component (C) has a diameter of 0.01 to 0.1 mm and a lenght of 0.5 to 20mm:
(4) A rubber composition described in (1), wherein the fiber used for Component (F) has a diameter of 0.01 to 0.1 mm and a length of 0.5 to 20mm.
(5) A rubber composition described in (1), wherein a raw material constituting Component (C) is a crystalline macromolecule comprising polyethylene and/or polypropylene and has a melting point of 190°C or lower;
(6) A rubber composition described in (1), wherein a raw material constituting Component (F) is a crystalline macromolecule comprising polyethylene and/or polypropylene and has a melting point of 190°C or lower.
(7) A rubber composition described in (1), wherein Component (E) has a Mohs hardness of 2 or greater and a distribution of particle diameter such that the particle diameter is 10 to 50 μm in 80% by mass or greater of a frequency in the distribution, and has an average particle diameter of the fine particles of 10 to 30 μm;
(8) A rubber composition described in (1), wherein a frequency at a peak value in a distribution of particle diameter of Component (E) is 20% by mass or greater;
(9) A rubber composition described in (1), wherein Component (E) has an aspect ratio of 1.1 or greater and has edgy portions;
(10) A rubber composition described in (1), wherein Component (E) is selected from inorganic fine particles and organic fine particles;

(11) A rubber composition for tires described in (1), which further comprises (G) a compound represented by following general formula (II):

HOOC-CH=CH-COO-A-OOC-CH=CH-COOH (II)

wherein A represents a group represented by $-R^9O-$, $-(R^{10}O)_s-$, $-CH_2CH(OH)CH_2O-$ or $-(R^{11}OOC-R^{12}-COO-)_tR^{11}O-$, $R^9$ representing a divalent hydrocarbon group having 2 to 36 carbon atoms, $R^{10}$ representing an alkylene group having 2 to 4 carbon atoms, s representing an average number of addition by mole which is a number of 1 to 60, $R^{11}$ representing a divalent hydrocarbon group having 2 to 18 carbon atoms or a group represented by $-(R^{13}O)_uR^{13}-$ ($R^{13}$ representing an alkylene group having 2 to 4 carbon atoms, and u representing an average number of addition by mole which is a number of 1 to 30), $R^{12}$ representing a divalent hydrocarbon group having 2 to 18 carbon atoms, and t representing an average number which is 1 to 30; in an amount of 0.3 to 7 parts by mass based on 100 parts by mass of the rubber component of Component (A);

(12) A pneumatic tire which uses a rubber composition described in (1) at a face of a tread portion which is substantially brought into contact with road surfaces; and

(13) A pneumatic tire described in (12), wherein an expansion ratio of a rubber layer in the tread portion which is substantially brought into contact with road surfaces is 3 to 50%.

## BRIEF DESCRIPTION OF THE DRAWINGS

Figure 1 shows a diagram schematically exhibiting a section of the tire of the present invention.

Figures 2(a) and 2(b) show diagrams schematically exhibiting sections of the tread portion cut along the circumferential direction and along the transverse direction, respectively, of the tread portion of the tire of the present invention.

Figure 3 shows a diagram describing the principle for arranging a fine particle-comprising organic fiber in a specific direction.

In the Figures, reference numerals mean as follows:

1: A pair of bead portions
2: A carcass
3: A belt
4: A tire
5: A tread
6: A cap portion
6A: A vulcanized rubber
7: A base portion
8: Cells having an elongated shape
9: A depressed portion
10: A protective layer
11: A spherical cell
12: A concave portion of a spherical cell
13: A fine particle
14: A fine particle-comprising organic fiber
15: A rubber composition
16: A metal die
17: The direction of extrusion

## THE MOST PREFERRED EMBODIMENT TO CARRY OUT THE INVENTION

The rubber composition of the present invention has closed cells and comprises (A) at least one rubber component selected from natural rubber and diene-based synthetic rubbers, (B) silica, (C) an organic fiber and (D) a silane coupling agent comprising a protected mercaptosilane.

The rubber composition having closed cells described above is advantageously used as a tread rubber having a cellular layer which is substantially brought into contact with road surfaces. The cellular rubber layer has an expansion ratio in the range of 3 to 50% and preferably in the range of 15 to 40%.

When the expansion ratio is in the above range, the excellent performance on ice can be exhibited by surely keeping the volume of depressed portions in the tread while the abrasion resistance and the performance on dry road surfaces are maintained.

The rubber component of Component (A) may comprise natural rubber alone, a conjugated diene-based polymer alone or both. The conjugated diene-based polymer is not particularly limited and can be suitably selected from conventional conjugated diene-based polymers in accordance with the object. Examples of the conjugated diene-based polymer include styrene-butadiene copolymers (SBR), polyisoprene (IR) and polybutadiene (BR). Among these conjugated diene-based synthetic rubbers, cis-1,4-polybutadiene is preferable due to the low glass transition temperature and the great effect on the performance on ice, and cis-1,4-polybutadiene having a cis content of 90% or greater is more preferable.

When the rubber composition of the present invention is used for the tread of a tire, a rubber having a glass transition temperature of - 60°C or lower is preferable as the rubber component. It is advantageous that the rubber component having a glass transition temperature described above is used since the obtained tread maintains the sufficient rubber elasticity at low temperature regions and exhibits the excellent performance on ice.

In the rubber composition of the present invention, a silane coupling agent comprising a protected mercaptosilane represented by the following general formula (I):

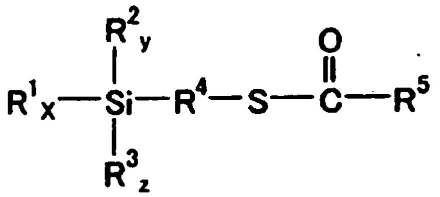

... (I)

is used as Component (D).

In general formula (I), $R^1$ represents a group represented by $R^6O$-, $R^6C(=O)O$-, $R^6R^7C=NO$-, $R^6R^7NCO$-, $R^6R^7N$- or $-(OSiR^6R^7)_m(OSiR^5R^6R^7)$ ($R^6$ and $R^7$ each independently representing hydrogen atom or a monovalent hydrocarbon group having 1 to 18 carbon atoms, and m representing an integer of 0 to 10), $R^2$ represents an atom or a group represented by $R^1$, hydrogen atom or a monovalent hydrocarbon group having 1 to 18 carbon atoms, $R^3$ represents an atom or a group represented by $R^1$, $R^2$ or - $[O(R^8O)_aH]$ ($R^8$ representing an alkylene group having 1 to 18 carbon atoms, and a representing an integer of 1 to 4), $R^4$ represents a divalent hydrocarbon group having 1 to 18 carbon atoms, $R^5$ represents a monovalent hydrocarbon group having 1 to 18 carbon atoms, and x, y and z represent numbers satisfying relations of $+y+z=3$, $0 \leqq x \leqq 3$, $0 \leqq y \leqq 2$ and $0 \leqq z \leqq 1$.

In general formula (I) shown above, examples of the monovalent hydrocarbon having 1 to 18 carbon atoms include alkyl groups having 1 to 18 carbon atoms, alkenyl groups having 2 t o18 carbon atoms, aryl groups having 6 to 18 carbon atoms and aralkyl groups having 7 to 18 carbon atoms. The alkyl group and the alkenyl group may be any of linear groups, branched groups and cyclic groups. The aryl group and the aralkyl group may have substituents such as lower alkyl groups on the aromatic ring.

Specific examples of the monovalent hydrocarbon group having 1 to 18 carbon atoms include methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, phenyl group, tolyl group, xylyl group, naphthyl group, benzyl group, phenetyl group and naphthylmethyl group.

In general formula (I) shown above, the alkylene group having 1 to 18 carbon atoms which is represented by $R^8$ may be any of a linear group, a branched group and a cyclic group. In particular, a linear groups is preferable.

Examples of the linear alkylene group include methylene group, ethylene group, trimethylene group, tetramethylene group, pentamethylene group, hexamethylene group, octamethylene group, decamethylene group and dodecamethylene group.

Examples of the divalent hydrocarbon group having 1 to 18 carbon atoms which is represented by $R^4$ include alkylene groups having 1 to 18 carbon atoms, alkenylene groups having 2 to 18 carbon atoms, cycloalkylene groups having 5 to 18 carbon atoms, cycloalkylalkylene groups having 6 to 18 carbon atoms, arylene groups having 6 to 18 carbon atoms and aralkylene groups having 7 to 18 carbon atoms. The alkylene group and the alkenylene group may be any of liner groups, branched groups and cyclic groups. The cycloalkylene group, the cycloalkylalkylene group, the arylene group and the aralkylene group may have substituents such as lower alkyl groups on the ring.

As the group represented by $R^4$, alkylene groups having 1 to 6 carbon atoms are preferable, and linear alkylene groups

such as methylene group, ethylene group, trimethylene group, tetramethylene group, pentamethylene group and hexamethylene group are preferable.

Examples of the silane coupling agent represented by general formula (I) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane and 2-lauroylthioethyltrimethoxysilane.

Since the silane coupling agent described above is used as Component (D), the rubber composition of the present invention exhibits excellent workability in processing of rubber due to a decrease in viscosity of the unvulcanized rubber, and an increase in the amount of the filler is made possible. As the result, the pneumatic tire exhibiting excellent abrasion resistance can be provided.

In the present invention, the silane coupling agent of Component (D) may be used singly or as a combination of two or more. The amount is selected in the range of 2 to 30% by mass of silica of Component (B). When the amount of the silane coupling agent is within the above range, the effect of the present invention can be sufficiently exhibited. It is preferable that the amount is in the range of 5 to 15% by mass.

It is preferable that a proton donor, typical examples of which include DPG (diphenylguanidine), is added as the agent for removing the protective agent in the final step of mixing so that coupling of the polymer with the silane coupling agent is achieved. It is preferable that the amount is 0.1 to 5.0 parts by mass and more preferably 0.2 to 3.0 parts by mass based on 100 parts by mass of the rubber component.

In the rubber composition of the present invention, examples of silica used as Component (B) include wet silica (hydrous silica) and dry silica (anhydrous silica). Among these silicas, wet silica is preferable since the effect of improving the fracture characteristics is exhibited most remarkably, and the gripping property on wet roads and the small rolling resistance are simultaneously exhibited most remarkably.

It is preferable that the wet silica has a specific surface area by nitrogen adsorption ($N_2SA$) obtained in accordance with the BET method of 140 to 280 $m^2/g$ and more preferably 170 to 250 $m^2/g$ from the standpoint of the balance between the reinforcing property, the workability, the gripping property on wet roads and the abrasion resistance. Examples of the preferable wet silica include AQ, VN3, LP and NA manufactured by TOSO SILICA Co., Ltd. and ULTRASIL VN3 ($N_2SA$: 210 $m^2/g$) manufactured by DEGUSSA Company.

Silica of Component (B) is used in an amount in the range of 20 to 150 parts by mass and preferably in the range of 40 to 90 parts by mass based on 100 parts by mass of the rubber component of Component (A). When the amount of the silica is less than 20 parts by mass, the effect of improving the reinforcing property and other physical properties is insufficient. When the amount exceeds 150 parts by mass, the workability and the rolling resistance deteriorate.

In the rubber composition of the present invention, where necessary, carbon black may be used in combination with the silica described above. It is preferable that the amount of carbon black is 30 to 160 parts by mass and more preferably 50 to 100 parts by mass based on 100 parts by mass of the rubber component of Component (A) from the standpoint of the reinforcing effect, the workability and other properties. Examples of the carbon black include HAF, N339, IISAF, ISAF and SAF. It is preferable that the carbon black has a specific surface area by nitrogen adsorption ($N_2SA$; in accordance with the method of Japanese Industrial Standard K 6217-2:2001) of 70 to 160 $m^2/g$ and more preferably 90 to 160 $m^2/g$. Carbon black having a dibutyl phthalate absorption (DBP; in accordance with the method of Japanese Industrial Standard K 6217-4:2001) of 80 to 170 $cm^3/100$ g is preferable. By using the carbon black described above, the effect of improving various properties and, in particular, the fracture characteristics is increased. When the abrasion resistance is considered, SAF having a very small particle diameter is preferable.

Where necessary, inorganic fillers other than silica may be used in suitable amounts as long as the object of the present invention is not adversely affected. Examples of the inorganic filler other than silica include compounds represented by the following general formula (III):

$$mM^1 \cdot xSiO_y \cdot zH_2O \qquad \text{(III)}$$

wherein $M^1$ represents at least one of metals selected from the group consisting of aluminum, magnesium, titanium, calcium and zirconium, oxides and hydroxides of these metals, hydrates of these metals, and carbonates of these metals; and m, x, y and z represent an integer of 1 to 5, an integer of 0 to 10, an integer of 2 to 5 and an integer of 0 to 10, respectively. When x and z both represent 0 in the above general formula, the inorganic compound is at least one of metals selected from aluminum, magnesium, titanium, calcium and zirconium and oxides and hydroxides of the metals.

As the inorganic filler represented by the general formula shown above, alumina ($Al_2O_3$) such as $\gamma$-alumina and $\alpha$-alumina, alumina hydrates ($Al_2O_3 \cdot H_2O$) such as behmite and diaspore, aluminum hydroxide [$Al(OH)_3$] such as gibsite and bialite, aluminum carbonate [$Al_2(CO_3)_2$], magnesium hydroxide [$Mg(OH)_2$], magnesium oxide (MgO), mag-

nesium carbonate ($MgCO_3$), talc ($3MgO\cdot 4SiO_2\cdot H_2O$), attapulgite ($5MgO\cdot 8SiO_2\cdot 9H_2O$), titanium white ($TiO_2$) , titanium black ($TiO_{2n-1}$), calcium oxide ($CaO$), calcium hydroxide [$Ca(OH)_2$], aluminum magnesium oxide ($MgO\cdot Al_2O_3$), clay ($Al_2O_3\cdot 2SiO_2$), kaolin ($Al_2O_3\cdot 2SiO_2\cdot 2H_2O$), pyrofilite ($Al_2O_3\cdot 4SiO_2\cdot H_2O$), bentonite ($Al_2O_3\cdot 4SiO_2\cdot 2H_2O$), aluminum silicate ($Al_2SiO_5$, $Al_4\cdot 3SiO_4\cdot 5H_2O$ etc.), magnesium silicate ($Mg_2SiO_4$, $MgSiO_3$ etc.), calcium silicate ($Ca_2\cdot SiO_4$ etc.), aluminum calcium silicate ($Al_2O_3\cdot CaO\cdot 2SiO_2$ etc.), magnesium calcium silicate ($CaMgSiO_4$), calcium carbonate ($CaCO_3$), zirconium oxide ($ZrO_2$), zirconium hydroxide [$ZrO(OH)_2\cdot nH_2O$], zirconium carbonate [$Zr(CO_3)_2$] and crystalline aluminosilicates having hydrogen, an alkali metal or an alkaline earth metal for modifying the electric charge such as various types of zeolite, can be used. It is preferable that $M^1$ in general formula (III) represents at least one metal or compound selected from aluminum metal, oxide of aluminum and hydroxides of aluminum, hydrates of the metal and the compounds and carbonate of aluminum.

The inorganic compound represented by the above formula may be used singly or as a combination of two or more.

As the rubber composition of the present invention, it is necessary that the composition comprise an organic fiber as Component (C). Component (C) and (F) a fine particle-comprising organic fiber which comprises (E) fine particles are used in combination.

When Component (F) described above is used in the cellular layer in the rubber described above, an excellent effect can be exhibited on removing water from the face of the tire and increasing friction of the face of the tire, and the performance on ice can be enhanced. When a material having a relatively great hardness is used as Component (E) which is used in Component (F), as described below, the material affects the condition of the surface of the vulcanized rubber and the molded product during extrusion in relation with the diameter of the organic fiber in the rubber, and this becomes one of the factors decreasing the workability in the production plant. Therefore, it is preferable that the rubber layer described above comprises a specific amount of Component (C) which does not comprises fine particles in combination with Component (F).

As the specific amount described above, it is preferable that the ratio of the amounts by mass of Component (C) to Component (F) is in the range of 98/2 to 2/98 and more preferably in the range of 95/5 to 5/95. It is preferable that the amount of Component (F) is in the range of 0.05 to 10 parts by mass and more preferably in the range of 0.01 to 5 parts by mass based on 100 parts by mass of the rubber component of Component (A).

In the rubber composition of the present invention, it is preferable that the sum of the amounts by mass of Component (C) and Component (F) is 1 to 20 parts by mass and more preferably 1.5 to 15 parts by mass based on 100 parts by mass of the rubber component of Component (A).

When the sum of the amounts is within the above range, the workability in extrusion is improved to decrease formation of rough skin, and the effect of using the fiber can be sufficiently obtained. In the case of the tread of a tire, formation of cracks is suppressed, and the sufficient improvement in the edge effect or the spike effect and the performance on ice corresponding to the effect can be found.

As the organic fibers used for Component (C) and Component (F), it is not necessary that fibers having the same raw material, the same shape, the same diameter or the same length are used for both components, but organic fibers different from each other may be used. It is preferable that organic fibers having the properties in the range described in the following are used for both components.

The raw material for the organic fiber and the organic fiber used for Component (F) is not particularly limited and can be suitably selected in accordance with the object. However, based on the relation with the rubber component of Component (A) as described above, it is preferable in the present invention that a resin constituting the fiber which exhibits a viscosity characteristic such that the viscosity becomes smaller than the viscosity of the rubber matrix of the rubber component of Component (A) before the temperature of the rubber composition reaches the maximum temperature of vulcanization during the vulcanization, is used. In other words, as the resin constituting the organic fiber, a resin exhibiting the thermal characteristic such that the resin is melted (including softening) before the temperature of the rubber composition reaches the maximum temperature of vulcanization.

When the resin constituting the organic fiber described above has the thermal characteristics described above, the cells having an elongated shape described above which can function as the minute grooves for draining water can be formed easily in the vulcanized rubber obtained by vulcanization of the rubber composition.

The maximum temperature of vulcanization means the maximum temperature exhibited by the rubber composition during the vulcanization of the rubber composition. For example, in the case of vulcanization in a mold, the maximum temperature of vulcanization means the maximum temperature exhibited by the rubber composition during the period from the time when the rubber composition is placed into the mold to the time when the rubber composition is taken out of the mold and cooled. The maximum temperature of vulcanization can be measured, for example, by embedding a thermocouple into the rubber composition. The viscosity of the rubber matrix means the flow viscosity, which is measured, for example, by using a cone rheometer or a capillary rheometer. The viscosity of the resin constituting the organic fiber means the melt viscosity, which is measured, for example, by using a cone rheometer or a capillary rheometer.

Therefore, examples of the preferable resin selected in the present invention include crystalline macromolecular resins having a melting point lower than the maximum temperature of vulcanization.

In the case of the crystalline macromolecule described above, the viscosity of the macromolecule becomes lower than the viscosity of the rubber matrix earlier when the difference between the melting point of the macromolecule and the maximum temperature of vulcanization of the rubber composition is greater since the macromolecule is melted more rapidly during vulcanization of the rubber composition. When the macromolecule is melted, gases present in the rubber composition such as gases generated from the blowing agent mixed into the rubber composition are collected into the inside of the macromolecule exhibiting a smaller viscosity than that of the rubber matrix. As the result, closed cells having a resin layer comprising fine particles at the interface with the rubber matrix, i.e., capsule-form cells having an elongated shape coated with the above resin, are efficiently formed without being crushed in the vulcanized rubber.

In the tread rubber of a tire which is substantially brought into contact with road surfaces, the capsule-form cells having an elongated shape are exposed at the surface of the tread. Grooves formed by the abrasion of the surface function as the minute grooves for draining water, and the edge effect and the spike effect are sufficiently exhibited in combination with the effect of removing the water films.

In contrast, when the melting point of the resin constituting the organic fiber is close to the maximum temperature of vulcanization of the rubber composition, the resin is not rapidly melted at the initial period of the vulcanization but is melted at the final period of the vulcanization. When the resin is melted at the final period of the vulcanization, a portion of the gases present in the rubber composition are not collected into the inside of the melted resin but are taken into the vulcanized rubber matrix. As the result, the cells having an elongated shape which should effectively function as the minute grooves for draining water are not efficiently formed. When the melting point of the resin of the organic fiber is excessively low, melt adhesion between organic fibers takes place during mixing the organic fiber into the rubber composition, and poor dispersion of the organic fiber arise. In this condition, the cells having an elongated shape which can function as minute grooves for draining water are not efficiently formed. Therefore, it is referable that the melting point of the resin of the organic fiber is selected in the range such that the resin is not melted or softened at temperatures in steps before the vulcanization and the viscosity of the resin and the viscosity of the rubber matrix are reversed in the step of vulcanization.

It is preferable that the upper limit of the melting point of the resin constituting the organic fiber is selected suitably with consideration on the above points although there is no restrictions on the upper limit. It is preferable that the melting point is lower than the maximum temperature of vulcanization, more preferably lower by 10°C or greater and most preferably lower by 20°C or greater. The temperature of vulcanization of a rubber composition in the industrial process is, in general, about 190°C as the highest value. For example, when the maximum temperature of vulcanization is set at a temperature exceeding this temperature of 190°C, the melting point of the above resin is selected in the range or 190°C or lower, preferably in the range of 180°C or lower and more preferably in the range of 170°C or lower.

The melting point of the resin described above can be measured in accordance with a method conventionally known by itself. For example, the peak temperature of melting measured by using a DSC measurement apparatus can be used as the melting point described above.

Based on the above descriptions, the resin constituting the organic fiber may be formed with a crystalline macromolecule and/or an amorphous macromolecule. As described above, it is preferable in the present invention that the resin is formed with an organic raw material comprising crystalline macromolecules in a great amount since the change in the viscosity takes place rapidly at a specific temperature due to the phase transition and control of the viscosity is easy, and it is more preferable that the resin is formed with crystalline macromolecules alone.

Examples of the crystalline macromolecule described above include polymers having a single composition such as polyethylene (PE), polypropylene (PP), polybutylene, polybutylene succinate, polyethylene succinate, syndiotactic 1,2-polybutadiene (SPB), polyvinyl alcohol (PVA) and polyvinyl chloride (PVC). Macromolecules having a melting point controlled in a suitable range by copolymerization or blending can also be used. Materials obtained by adding additives to these resins may also be used. The crystalline macromolecule may be used singly or in combination of two or more.

Among these crystalline macromolecules, polyolefins and copolymers of polyolefins are preferable, polyethylene (PE) and polypropylene (PP) are more preferable since these macromolecules are suitable for general use and easily available, and polyethylene (PE) is most preferable due to the relatively low melting point and easy handling.

Examples of the amorphous macromolecule include polymethyl methacrylate (MMA), acrylonitrile-butadiene-styrene copolymers (ABS), polystyrene (PS), polyacrylonitrile, copolymers of these polymers and blends of these polymers. The amorphous macromolecule may be used singly or in combination of two or more.

It is preferable that the organic fiber of Component (C) and Component (F) used in the present invention is a short fiber having the length of the fiber in the range of 0.5 to 20 mm and more preferably in the range of 1 to 10 mm.

When the organic fiber having the length described above is present in the vulcanized rubber forming the cellular rubber layer, the edge effect and the spike effect are effectively exhibited and, in combination with the blowing agent described below, it is made possible that cells having an elongated shape which can efficiently function as the minute grooves for draining water are sufficiently formed. When the length of the organic fiber is smaller than 0.5 mm, the effect described above is not sufficiently exhibited.

When the length of the organic fiber exceeds 20 mm, entanglement of the organic fibers takes place, and the property

for dispersion tends to decrease.

It is preferable that the organic fiber has a diameter in the range of 0.01 to 0.1 mm and more preferably in the range of 0.015 to 0.09 mm. When the diameter is smaller than 0.01 mm, the organic fiber tends to be cut, and the edge effect or the spike effect cannot be sufficiently exhibited. When the diameter exceeds 0.1 mm, a problem arises on workability.

As described above, the organic fiber in Component (F) used in the present invention comprises Component (E). Examples of Component (E) include inorganic fine particles and organic fine particles. Examples of the inorganic fine particles include fine particles of glass, fine particles of aluminum hydroxide, fine particles of alumina and fine particles of iron, and examples of the organic fine particles include fine particles of (meth)acrylic resins and fine particles of epoxy resins. The fine particles may be used singly or in combination of two or more. Among these fine particles, inorganic fine particles are preferable due to the excellent scratching effect on ice.

It is preferable that Component (E) has a Mohs hardness greater than 2 and more preferably greater than 5. When the Mohs hardness of Component (E) is the same as the hardness of ice (1~2) or greater, i.e., 2 or greater, the tread can exhibit more remarkable scratching effect at the surface portion of the cellular rubber. Therefore, the obtained tire exhibits a great friction coefficient with road surfaces of ice and snow and exhibits the excellent performance on ice (the excellent property of the planar braking and driving of the tire on road surfaces of ice and snow).

Examples of Component (E) exhibiting a great hardness include gypsum, calcite, fluorite, orthoclase, quartz and diamond. Preferable examples of Component (E) include silica glass (the hardness: 6.5), quartz (the hardness: 7.0) and melted alumina (the hardness: 9.0), which have a Mohs hardness of 5 or greater. Among these materials, silica glass and alumina (aluminum oxide) are inexpensive and can be used easily.

It is preferable that Component (E) has a distribution of particle diameter such that the particle diameter is 10 to 50 μm in 80% and more preferably in 90% by mass or greater of the frequency in the distribution, and has an average particle diameter of the fine particles of 10 to 30 μm.

When the particle diameter in the above frequency in the distribution of particle diameter contains diameters smaller than 10 μm, particles tending to be aggregated in the production of Component (F) are contained, and the property for dispersion of the fine particles tends to become poor. A tire using such fiber cannot exhibit sufficient scratching effect, edge effect or spike effect. When the particle diameter in the above frequency contains diameters exceeding 50 μm, problems such as fracture of the fiber arise frequently during preparation of Component (F), and the desired Component (F) cannot be obtained efficiently.

It is preferable that the frequency at the peak value in the distribution of particle diameter of Component (E) is 20% by mass or greater, more preferably 25% by mass or greater and most preferably 30% by mass or greater.

When the frequency at the peak value in the distribution of particle diameter of Component (E) is 20% by mass or greater, the distribution curve of the particle size of Component (E) becomes sharp, and the distribution of particle diameter becomes uniform. Therefore, the excellent fiber which suppresses fracture of fiber during preparation of Component (F) can be obtained, and the tire prepared by using this fiber exhibits the stable performance on ice. When the particle diameter is within the range described above, the greater the particle diameter, the more excellent the performance on ice.

The frequency described above means the fraction by mass of particles present in a divided portion when the distribution of particle diameter in the entire mass of the particles (the distribution curve of particle diameter) is divided with respect to the particle diameter into portions each having a width of 2 μm. The frequency at the peak value means the frequency in the portion containing the maximum peak value among the divided portions of the distribution curve of particle diameter.

It is preferable that Component (E) has an aspect ratio of 1.1 or greater and has edgy portions. It is more preferable that the aspect ratio is 1.2 or greater and most preferably 1.3 or greater. Having edgy portion means that the surface is not entirely a spherical surface or a smoothly curved surface.

Fine particles originally having edgy portions may be used as Component (E). Fine particles having edgy portions on the surface can also be obtained by pulverization even when fine particles have a spherical shape, and more edgy portion can be made present in this case.

The shape of Component (E) can be confirmed by observing a group of fine particles by an electron microscope. It can be confirmed that the shape is not spherical. When the aspect ratio which is the ratio of the major axis to the minor axis is 1.1 or greater, the edgy portion formed on the surface of the particles can be made sufficiently edgy. Therefore, the scratching effect or the edge effect and the spike effect of the tire prepared by using the fine particle-comprising organic fiber of Component (F) which comprises Component (E) can be sufficiently enhanced.

It is preferable that the content of Component (E) is in the range of 5 to 50 parts by mass and more preferably in the range of 7 to 50 parts by mass based on 100 parts by mass of the resin constituting Component (F).

When the amount of Component (E) is within the above range, the scratching effect of the rubber composition in the rubber product and, in the case of the tread of a tire, the edge effect and the spike effect are sufficiently exhibited, and Component (F) can be efficiently obtained with little problems such as fracture of fibers in the preparation of Component (F).

In the present invention, a blowing agent is added into the rubber composition before molding the cellular rubber layer so that cells are formed after the vulcanization. By using the blowing agent and the fiber described above, minute grooves

for draining water with cells having an elongated shape are formed in the cellular rubber layer described above forming the vulcanized rubber or the tread, and the function of removing the water films can be provided.

Examples of the blowing agent include dinitrosopentamethylenetetramine (DNPT); azodicarbonamide (ADCA); dinitrosopentastyrene-tetramine; benzenesulfonyl hydrazide derivatives; oxybisbenzenesulfonyl hydrazide (OBSH); ammonium bicarbonate, sodium bicarbonate and ammonium carbonate which generate carbon dioxide; and nitroso-sulfonylazo compounds, N,N'-dimethyl-N,N-dinitrophthalamide, toluenesulfonyl hydrazide, p-toluenesulfonyl semicarbazide and p,p'-oxybis(benzenesulfonyl semicarbazide) which generate nitrogen.

Among these blowing agents, dinitrosopentamethylenetetramine (DNPT) and azodicarbonamide (ADCA) are preferable when the workability in production is considered, and azodicarbonamide (ADCA) is more preferable. The blowing agent may be used singly or in combination of two or more. The vulcanized rubber becomes a cellular rubber having a great expansion ratio due to the working of the blowing agent.

In the present invention, it is preferable that a blowing promoter is used in combination with the blowing agent described above so that the efficient blowing can be achieved. Examples of the blowing promoter include promoters conventionally used for production of cellular products such as urea, zinc stearate, zinc benzenesulfinate and zinc oxide. Among these blowing promoters, urea, zinc stearate and zinc benzenesulfinate are preferable. The blowing promoter may be used singly or in combination of two or more.

The amount of the blowing agent can be suitably decided in accordance with the object. In general, it is preferable that the amount is about 1 to 10 parts by mass based on 100 parts by mass of the rubber component. The blowing agent may be mixed into the rubber matrix or into each organic fiber.

In the rubber composition, a compound represented by the following general formula (II):

$$HOOC\text{-}CH{=}CH\text{-}COO\text{-}A\text{-}OOC\text{-}CH{=}CH\text{-}COOH \qquad (II)$$

which is a maleic acid ester or a fumaric acid ester of a polyhydric alcohol is used as Component (G).

In general formula (II), A represents a group represented by $-R^9O-$, $-(R^{10}O)_s-$, $-CH_2CH(OH)CH_2O-$ or $-(R^{11}OOC-R^{12}-COO-)_tR^{11}O-$. $R^9$ represents a divalent hydrocarbon group having 2 to 36 carbon atoms. Examples of the divalent hydrocarbon group include alkylene groups and alkenylene groups having 2 to 36 carbon atoms and divalent aromatic hydrocarbon group having 6 to 18 carbon atoms. Among these divalent hydrocarbon groups, alkylene groups having 2 to 18 carbon atoms and phenylene group are preferable, and alkylene groups having 4 to 12 carbon atoms are more preferable. $R^{10}$ represents an alkylene group having 2 to 4 carbon atoms and preferably ethylene group or propylene group. s represents an average number of addition by mole of oxyalkylene group, which is a number of 1 to 60, preferably 2 to 40 and more preferably 4 to 30. $R^{11}$ represents a divalent hydrocarbon group having 2 to 18 carbon atoms. Examples of the divalent hydrocarbon group include alkylene groups and an alkenylene groups having 2 to 18 carbon atoms, divalent aromatic hydrocarbon groups having 6 to 18 carbon atoms and groups represented by $-(R^{13}O)_uR^{13}-$, wherein $R^{13}$ represents an alkylene group having 2 to 4 carbon atoms, and u represents an average number of addition by mole of oxyalkylene group, which is a number of 1 to 30, preferably 1 to 20 and more preferably 2 to 15. $R^{12}$ represents a divalent hydrocarbon group having 2 to 18 carbon atoms. Examples of the divalent hydrocarbon group include alkylene groups and alkenylene group having 2 to 18 carbon atoms and divalent aromatic hydrocarbon groups having 6 to 18 carbon atoms. Among these groups, alkylene groups having 2 to 12 carbon atoms and phenylene group are preferable, and alkylene groups having 2 to 8 carbon atom are more preferable. t represents an average number which is 1 to 30, preferably 1 to 20 and more preferably 1 to 15.

Examples of the compound represented by general formula (II) include dimaleates of alkylenediols such as glycerol dimaleate, 1,4-butanediol dimaleate and 1,6-hexanediol dimaleate; difumarates of alkylenediols such as 1,6-hexanediol difumarate; dimaleates of polyoxyalkylene glycols such as PEG200 dimaleate and PEG600 dimaleate (PEG200 and PEG600 representing polyethylene glycols having average molecular weights of 200 and 600, respectively); polyesters of polyalkylene glycols of the both end carboxylic acid type and maleic acid such as polybutylene maleate having carboxyl group at both ends and poly(PEG200) maleate having carboxyl group at both ends; polybutylene adipate maleate having carboxyl group at both ends; difumarates of polyoxyalkylene glycols such as PEG600 difumarate; and polyesters of polyalkylene glycols of the both end carboxylic acid type and fumaric acid such as polybutylene fumarate having carboxyl group at both ends and poly(PEG200) fumarate having carboxyl group at both ends.

Among these compounds, polyethylene glycol dimaleate and polyethylene glycol difumarate are preferable from the standpoint of the properties and the economy.

It is preferable that the molecular weight of Component (G) is 250 or greater, more preferably in the range of 250 to 5,000 and most preferably in the range of 250 to 3,000. When the molecular weight is within the above range, the compound is advantageous from the standpoint of safety due to the high flash point and environment of working due to little generation of smoke.

In the present invention, Component (G) may be used singly or in combination of two or more. The amount of Component (G) is selected in the range of 0.3 to 7 parts by mass based on 100 parts by mass of the rubber component of Component

(A). When the amount of Component (G) is within the above range, the obtained tire maintains the rolling resistance property and exhibits improved steering stability in dry conditions. It is preferable that the content of Component (G) is in the range of 0.5 to 5 parts by mass.

Other components can be used in the present invention as long as the effect of the present invention is not adversely affected. Examples of the other components include vulcanizing agents such as sulfur, vulcanization accelerators such as dibenzothiazyl disulfide, accelerator activators, agents preventing sulfurization such as N-cyclohexyl-2-benzothiazylsulfenamide and N-oxydiethylenebenzothiazylsulfenamide, anti-ozonants, coloring agents, antistatic agents, dispersants, lubricating agents, antioxidants, softeners, inorganic fillers such as carbon black and silica and other compounding ingredients conventionally used in the rubber industry, which are used by suitable selection in accordance with the object. The other components may be used singly or in combination of two or more.

Embodiments and examples will be described specifically with reference to drawings in the following.

Figure 1 shows a diagram schematically exhibiting a section of the tire of the present invention. Figures 2(a) and 2(b) show diagrams schematically exhibiting sections of the tread portion along the circumferential direction and along the transverse direction, respectively, of the tread portion of the tire of the present invention. Figure 3 shows a diagram describing the principle for arranging a fine particle-comprising organic fiber in a specific direction.

The tire of the present invention is a tire comprising a cellular rubber layer disposed on the face which is substantially brought into contact with road surfaces and, specifically, a pneumatic tire comprising a cellular rubber layer having closed cells disposed at least on the face of a tire tread which is substantially brought into contact with road surfaces, as shown in Figures 1 to 3.

For example, as shown in Figure 1, the tire has a radial structure in which a pair of bead portions 1, a carcass 2 connected to the pair of bead portions 1 in a toroidal form, a belt 3 which binds the crown portion of the carcass 2 as a hoop and a tread 5 comprising two layers of a cap portion 6 and a base portion 7 are successively disposed. The inner structures except the tread 5 are the same as the structure of a conventional radial tire, and specific description on these structure will be omitted.

The surface portion of the tread 5 described above is the cellular rubber layer formed by vulcanizing the rubber composition of the present invention. The process for producing the tire 4 is not particularly limited. For example, the tire is produced by molding and vulcanization in a prescribed mold at a prescribed temperature under a prescribed pressure. As the result, a tire 4 having a cap tread 6 formed with the cellular rubber layer of the present invention obtained by vulcanizing an unvulcanized tread can be obtained.

To form the cellular rubber layer of the tire of the present invention, the rubber composition described specifically in the above is mixed, heated and extruded in accordance with the process described in the following under the condition described in the following.

In the mixing, conditions related to the mixing apparatus such as the volume of addition into the mixing apparatus, the speed of rotation of the rotor, the temperature of mixing and the time of mixing are not particularly limited and can be suitably selected in accordance with the object. As the mixing apparatus, a commercial mixing apparatus can be advantageously used.

In the heating and the extrusion, the conditions such as the time of heating, the time of extrusion, the apparatus for heating and the apparatus for extrusion are not particularly limited and can be suitably selected in accordance with the object. As the apparatus for heating and the apparatus for extrusion, commercial apparatuses can be advantageously used. When a blowing agent is present, the temperature of heating and the temperature of extrusion are suitably selected in a range such that blowing with the blowing agent does not take place. It is preferable that the temperature of extrusion is about 90 to 110°C.

In the present invention, it is preferable that the organic fiber described above is arranged in the direction of extrusion by the extrusion or the like process. To achieve the arrangement effectively, fluidity of the rubber composition is controlled within a limited temperature range. Specifically, the viscosity of the rubber composition is changed and the fluidity is enhanced by suitably adding a processing modifier to the rubber composition. Examples of the processing modifier include plasticizers such as aromatic oils, naphthenic oils, paraffinic oils and ester-based oils and liquid polymers such as liquid polyisoprene rubber and liquid polybutadiene rubber.

When the organic fiber is used in the present invention, it is preferable in the preparation of the cellular rubber layer in the tread that the fine particle-comprising organic fiber of Component (F) and the organic fiber of Component (C) are arranged in the direction parallel with the face of the tread which is brought into contact with road surfaces, i.e., in the circumferential direction of the tire. In this arrangement, the property for draining water on the tire in the direction of driving can be enhanced, and the performance on ice can be improved effectively.

As the process for arranging the organic fibers described above in the cellular rubber layer, for example as shown in Figure 3, the fine particle-comprising organic fiber and the like 14 are arranged in the specific direction by extruding the rubber composition 15 comprising the fine particle-comprising organic fiber and the like 14 from a die 16 of an extruder in which the sectional area of the flow route is decreased at portions closer to the outlet. In this case, the fine particle-comprising organic fiber and the like 14 in the rubber composition 15 before being extruded are gradually arranged in

a manner such that the longitudinal direction of the fine particle-comprising organic fiber and the like are arranged in the direction of the extrusion (the direction shown by the arrow P), and the longitudinal direction of the fiber can be approximately completely arranged in the direction of the extrusion (the direction shown by the arrow P) when the rubber composition is extruded from the die 16. The degree of the arrangement of the fine particle-comprising fiber and the like 14 in the rubber composition 15 can be changed by adjusting the degree of the decrease in the sectional area of the flow route, the speed of extrusion and the viscosity of the rubber composition 15 before being vulcanized.

In the present invention, the condition of vulcanization is not particularly limited and can be suitably selected in accordance with the type of the rubber component and the like. When the cellular rubber layer is prepared as the tread as described above, the vulcanization in a mold is preferable. It is preferable that the temperature of vulcanization is selected in a manner such that the maximum temperature of vulcanization of the rubber composition described above in the vulcanization is the same with or higher than the melting point of the resin constituting the organic fiber. When the maximum temperature of vulcanization is lower than the melting point of the resin, fiber is not melted as described above, and the gases generated by the blowing cannot be taken into the resin. Therefore, the cells having an elongated shape cannot be efficiently formed in the cellular rubber layer. The apparatus for vulcanization is not particularly limited, and a commercial product can be advantageously used.

In the tread (the cellular rubber layer) of the tire of the present invention, the depressed portions having an elongated shape formed by the cells on the surface of the tread are arranged in a specific direction. Therefore, the depressed portions function as the route of draining water for effective removal of water. The depressed portion exhibits excellent properties such as resistance to cleavage, the property of maintaining the shape of the route of draining water, the abrasion resistance of the edge portion of the route of draining water and the property for maintaining the route of draining water under application of load since the depressed portion has the protective layer described above and, in particular, the protective layer in which the fine particles are present as described above. Moreover, the excellent properties described above are exhibited in the tire of the present invention during the entire period from the initial period to the final period of the use since the cells having an elongated shape are present in the entire portions of the cellular layer, and the tire of the present invention exhibits the excellent performance on ice.

In the present invention, it is preferable that the average diameter (μm) of the cell having an elongated shape formed in the cellular rubber layer is about 10 to 500 μm. When the average diameter described above is smaller than 10 μm, there is the possibility that the ability of the minute grooves for draining water is decreased. When the average diameter described above exceeds 500 μm, the cut resistance and the resistance to block chipping deteriorate, and there is the possibility that the abrasion resistance on dry road surfaces is decreased.

The tire of the present invention can be advantageously applied not only to passenger cars but also to other various vehicles such as trucks and buses. The tire can be applied to constructions to which suppressing slipping on road surfaces having ice and snow is required. The tread of the tire can be used, for example, for treads used for retreading tires and filled tires as long as suppressing slipping on road surfaces having ice is required as described above. When the tire is a pneumatic tire, the air and an inert gas such as nitrogen can be used as the gas for inflation at the inside.

In the above embodiments, the tread having a two-layer structure is used as the example. However, the structure of the tread is not particularly limited, and the tread may have a single layer structure, multi-layer structures having layers disposed in the radial direction of the tire or structures in which the tread is divided into portions in the circumferential direction or in the transverse direction of the tire. It is preferable that at least a portion of the surface layer of the tread is constituted with the rubber composition of the present invention.

## EXAMPLES

The present invention will be described more specifically with reference to examples in the following. However, the present invention is not limited to the examples. The measurements of various properties were conducted in accordance with the methods described below.

### Examples 1 to 4 and Comparative Examples 1 to 6

Rubber compositions in Examples and Comparative Examples were prepared in accordance with the formulations shown in Table 1 in accordance with the conventional process.

The temperature of vulcanization during vulcanization of each rubber composition was measured using a thermocouple embedded into the rubber composition. The temperature exceeded the melting point of the resin for the organic fiber before reaching the maximum temperature of vulcanization, and the viscosity of the resin was smaller than the viscosity of the matrix during the vulcanization of the rubber composition. When the viscosity of each resin for the organic fiber at the maximum temperature of vulcanization (the melt viscosity) was measured using a cone rheometer (the measurement was stopped when the torque of the rubber reached the maximum value, and the change in the torque and the

change in the pressure of blowing were measured using the torque as the viscosity of the rubber), and the viscosity was found to be 6. For the measurement of the viscosity of the rubber composition described above at the maximum temperature of vulcanization (the flow viscosity), the torque was measured with time under application of an input of 100 cycles/minute having a constant amplitude using a cone rheometer, the type 1-C manufactured by MONSANTO Company while the temperature was changed, and the minimum torque obtained by the measurement was used as the viscosity (the dome pressure: 0.59 MPa; the holding pressure: 0.78 MPa; the closing pressure: 0.78 MPa; the angle of oscillation: ±5°). The viscosity was found to be 11.
Using the obtained rubber composition for the tread (the cellular rubber layer), a radial tire for passenger cars having a size of 185/70R13 for the test was prepared in accordance with the conventional process.

<Measurement of the expansion ratio>

The expansion ratio represented by Vs means the expansion ratio of the entire tread. Vs was calculated using samples taken from each tread (n=10) in accordance with the following equation:

$$Vs = (\rho_0/\rho_1 - 1) \times 100\ (\%)$$

In the above equation, $\rho_1$ represents the density (g/cm$^3$) of a vulcanized rubber (a cellular rubber), and $\rho_0$ represents the density (g/cm$^3$) of the solid phase portion in the vulcanized rubber (the cellular rubber). The density of the rubber after being vulcanized (the cellular rubber) and the density of the solid phase portion of the rubber after being vulcanized (the cellular rubber) were obtained, for example, by measuring the mass in ethanol and the mass in the air, followed by calculation based on the obtained values. The results of the evaluation are shown in Table 1.

[Evaluation of an unvulcanized rubber]

<Measurement of Mooney viscosity>

The Mooney viscosity was measured in accordance with "the method for obtaining the viscosity and the scorch time using a Mooney viscometer" described in Japanese Industrial Standard K 6300-1. The smaller the Mooney viscosity, the better the workability.

[Evaluation of properties of a tire]

(Performance on ice>

Four tires for the test prepared as described above (the tire size: 185/70R13) were mounted to a passenger car of the 1600 cc class made in Japan, and the property of braking on ice was measured at the temperature of ice of -1°C. Using the tire in Comparative Example 1 as the control tire, the performance on ice was calculated as follows:

$$\text{Performance on ice} = (\text{braking distance of control tire} / \text{braking distance of tire for the test}) \times 100$$

The greater the value, the better the Performance on ice. The results of the evaluation are shown in Table 1.

<Abrasion resistance>

After a tire for the test was mounted on an actual vehicle and driven on paved roads for 10,000 km, the remaining depth of the groove was measured. The distance of driving for abrasion of the tread by 1 mm was evaluated as the relative value and expressed as an index using the result in Comparative Examples as the reference, which was set at 100 (corresponding to 8,000 km/mm). The greater the index, the better the abrasion resistance. The results of the evaluation are shown in Table 1.
Table 1

| Example | 1 | 2 | 3 | 4 | | | | | | |
|---|---|---|---|---|---|---|---|---|---|---|
| Comparative Example | | | | | 1 | 2 | 3 | 4 | 5 | 6 |
| Formulation | | | | | | | | | | |
| naturalrubber | 70 | 70 | 70 | 70 | 70 | 70 | 70 | 70 | 70 | 70 |
| cis-1,4-polybutadiene rubber*1 | 30 | 30 | 30 | 30 | 30 | 30 | 30 | 30 | 30 | 30 |
| carbon black *2 | 35 | 20 | 20 | 20 | 60 | 30 | 30 | 30 | 15 | 20 |
| silica *3 | 35 | 50 | 50 | 50 | - | 30 | 30 | 30 | 45 | 50 |
| silane coupling agent *4 | - | - | - | - | - | 3.0 | 3.0 | 3.0 | 4.5 | 5.0 |
| "NXT"silane coupling agent *5 | 3.5 | 5.0 | 5.0 | 5.0 | - | - | - | - | - | - |
| spindle oil | 10 | 10 | 10 | 10 | 10 | 10 | 10 | 10 | 10 | 10 |
| PEGM *6 | - | - | - | 2 | - | - | - | - | - | - |
| stearic acid | 2 | 2 | 2 | 2 | 2 | 2 | 2 | 2 | 2 | 2 |
| antioxidant TPPD *7 | 2.5 | 2.5 | 2.5 | 2.5 | 2.5 | 2.5 | 2.5 | 2.5 | 2.5 | 2.5 |
| zinc oxide | 2 | 2 | 2 | 2 | 2 | 2 | 2 | 2 | 2 | 2 |
| vulcanization accelerator DPG *8 | 0.2 | 0.2 | 0.2 | 0.2 | 0.2 | 0.2 | 0.2 | 0.2 | 0.2 | 0.2 |
| vulcanization accelerator MBTS *9 | 0.6 | 0.6 | 0.6 | 0.6 | 0.6 | 0.6 | 0.6 | 0.6 | 0.6 | 0.6 |
| vulcanization accelerator CBS *10 | 1.2 | 1.2 | 1.2 | 1.2 | 1.2 | 1.2 | 1.2 | 1.2 | 1.2 | 1.2 |
| sulfur | 1.2 | 1.2 | 1.2 | 1.2 | 1.2 | 1.2 | 1.2 | 1.2 | 1.2 | 1.2 |
| blowing agent DNPT *11 | 2.5 | 2.5 | 2.5 | 2.5 | 2.5 | 2.5 | 2.5 | 2.5 | 2.5 | 2.5 |
| urea | 2.5 | 2.5 | 2.5 | 2.5 | 2.5 | 2.5 | 2.5 | 2.5 | 2.5 | 2.5 |
| fine particle-comprising organic fiber *12 | 2 | 2 | 3 | 3 | 2 | - | 2 | 3 | 2 | 2 |
| organic fiber *13 | 1 | 1 | 1 | 1 | 1 | 1 | 1 | 1 | 1 | 1 |
| Unvulcanized rubber | | | | | | | | | | |
| Mooney viscosity | 54.3 | 55.2 | 56.1 | 54.2 | 55.0 | 54.4 | 56.1 | 57.2 | 56.6 | 63.9 |
| Performance of tire | | | | | | | | | | |
| expansion ratio (%) | 19.2 | 19.9 | 20.7 | 21.4 | 20.2 | 19.5 | 20.9 | 21.3 | 21.2 | 19.7 |
| performance on ice | 110 | 117 | 122 | 124 | 100 | 108 | 118 | 123 | 126 | 113 |

(continued)

| | | | | | | | | | | |
|---|---|---|---|---|---|---|---|---|---|---|
| Performance of tire | | | | | | | | | | |
| abrasion resistance | 94 | 87 | 83 | 85 | 100 | 85 | 79 | 74 | 71 | 85 |

Notes:
*1: cis-1,4-Polybutadiene rubber (the trade name: UBEPOL 150L; manufactured by UBE KOSAN Co., Ltd.)
*2: Carbon black ([N134 ($N_2SA$: 146 $m^2/g$)]; manufactured by ASAHI CARBON Co., Ltd.)
*3: Silica (NIPSIL AQ; manuractured by TOSO SILICA Co., Ltd.)
*4: Silane coupling agent (Si69; manufactured by DEGUSSA Company)
*5: "NXT" silane coupling agent; manufactured by GENERAL ELECTRIC Company; the chemical name: 3-octanoylthiopropyltriethoxysilane
*6: PEGM; a polyester of polyethylene glycol and maleic acid of the both end carboxylic acid type having an average degree of polymerization of 4.5 (the degree of polymerization at the polyester portion: 5)
*7: Antioxidant; (N-isopropyl-N'-phenyl-p-phenylenediamine)
*8: Vulcanization accelerator; (DPG; diphenylguanidine)
*9: Vulcanization accelerator; (MBTS; dibenzothiazyl disulfide)
*10: Vulcanization accelerator; (CBS; N-cyclohexyl-2-benzothiazol sulfenamide)
*11: Blowing agent; (DNPT; dinitrosopentamethylenetetramine)
*12: Fine particle-comprising organic fiber; the resin constituting the fiber: polyethylene having a melting point of 132°C; the content of the fine particles: 15 parts by mass; the average diameter of the fine particles: 20 μm; the average diameter of the fiber: 32 μm; the average length of the fiber: 2 mm
*13: Organic fiber; the properties of the resin constituting the fiber: the same as those in the fine particle-comprising organic fiber

The following are shown by the results in Table 1. Although the entire amount of the filler was 70 parts by mass in Examples 1 to 4 (silica + carbon black) and 60 parts by mass in Comparative Examples 1 to 5, which was less than in Examples 1 to 4 by 10 parts by mass, the Mooney viscosity of the unvulcanized rubber was not much different between Examples 1 to 4 and Comparative Examples 1 to 5.
Although the formulations in Example 2 and Comparative Example 6 were the same except that "NXT" silane coupling agent was used in Example 1 and a conventional silane coupling agent was used in Comparative Example 6, the Mooney viscosity was higher in Comparative Example 6 by 8.7, showing inferior workability.
When the performance on ice and the abrasion resistance are compared between Example 2 and Comparative Example 6, results were more excellent in Examples 2 with respect to both properties.
It can be shown that, when the abrasion resistance was evaluated based on the performance on ice, in general, more excellent abrasion resistance was obtained in Examples than in Comparative Examples.

## INDUSTRIAL APPLICABILITY

The present invention can provide the rubber composition which exhibits excellent workability in processing the rubber and can provide a tire exhibiting excellent performance of braking and driving on road surfaces having ice and snow (excellent performance on ice) and excellent abrasion resistance and the pneumatic tire which is obtained by using the rubber composition for the tread and exhibits the performance described above. The present invention can be applied advantageously to tires for passenger cars.

## Claims

1. A rubber composition which has closed cells and comprises (A) at least one rubber component selected from natural rubber and diene-based synthetic rubbers, (B) silica in an amount of 10 to 150 parts by mass based on 100 parts by mass of the rubber component, (C) an organic fiber in an amount of 0.02 to 20 parts by mass based on 100 parts by mass of the rubber component and (D) a silane coupling agent represented by following general formula (I):

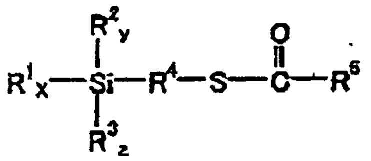 ... (I)

wherein $R^1$ represents a group represented by $R^6O$-, $R^6C(=O)O$-. $R^6R^7C=NO$-, $R^6R^7NCO$-, $R^6R^7N$- or $-(OSiR^6R^7)_m(OSiR^5R^6R^7)$ ($R^6$ and $R^7$ each independently representing hydrogen atom or a monovalent hydrocarbon group having 1 to 18 carbon atoms, and m representing an integer of 0 to 10), $R^2$ represents an atom or a group represented by $R^1$, hydrogen atom or a monovalent hydrocarbon group having 1 to 18 carbon atoms, $R^3$ represents an atom or a group represented by $R^1$ or $R^2$ or a group represented by $-(O(R^8O)_aH]$ ($R^8$ representing an alkylene group having 1 to 18 carbon atoms, and a representing an integer of 1 to 4), $R^4$ represents a divalent hydrocarbon group having 1 to 18 carbon atoms, $R^6$ represents a monovalent hydrocarbon group having 1 to 18 carbon atoms, and x, y and z represent numbers satisfying relations of x+y+z=3, $0 \leqq x \leqq 3$, $0 \leqq y \leqq 2$ and $0 \leqq z \leqq 1$; in an amount of 1 to 30% by mass based on the amount by mass of silica of Component (B).
wherein Component (C) is
(F) a fine particle-comprising organic fiber which comprises (E) fine particles.

**2.** A rubber composition according to Claim 1, wherein Component (F) comprises Component (E) in an amount of 5 to 90 paris by mass based on 100 parts by mass of a raw material constituting Component (C).

**3.** A rubber composition according to Claim 1, wherein the fiber used for Component (C) has a diameter of 0.01 to 0.1 mm and a length of 0.6 to 20 mm.

**4.** A rubber composition according to Claim 1, wherein the fiber used for Component (F) has a diameter of 0.01 to 0.1 mm and a length of 0.5 to 20 mm.

**5.** A rubber composition according to Claim 1, wherein a raw material constituting Component (C) is a crystalline macromolecule comprising polyethylene and/or polypropylene and has a melting point of 190°C or lower.

**6.** A rubber composition according to Claim 1, wherein a raw material constituting Component (F) is a crystalline macromolecule comprising polyethylene and/or polypropylene and has a melting point of 190°C or lower.

**7.** A rubber composition according to Claim 1, wherein Component (E) has a Mohs hardness of 2 or greater and a distribution of particle diameter such that the particle diameter is 10 to 50 $\mu$m in 80% by mass or greater of a frequency in the distribution, and has an average particle diameter of the fine particles of 10 to 30 $\mu$m

**8.** A rubber composition according to Claim 1, wherein a frequency at a peak value in a distribution of particle diameter of Component (E) is 20% by mass or greater.

**9.** A rubber composition according to Claim 1, wherein Component (E) has an aspect ratio of 1.1 or greater and has edgy portions.

**10.** A rubber composition according to Claim 1, wherein Component (E) is selected from inorganic fine particles and organic fine particles.

**11.** A rubber composition for tires according to Claim 1, which further comprises (G) a compound represented by following general formula (II):

$$HOOC\text{-}CH=CH\text{-}COO\text{-}A\text{-}OOC\text{-}CH=CH\text{-}COOH \qquad (II)$$

wherein A represents a group represented by $-R^9O$-, $-(R^{10}O)s$-, $-CH_2CH(OH)CH_2O$- or $-(R^{11}OOC\text{-}R^{12}\text{-}COO\text{-})_tR^{11}O$-, $R^9$ representing a divalent hydrocarbon group having 2 to 36 carbon atoms, $R^{10}$ representing an alkylene group having 2 to 4 carbon atoms, s representing an average number of addition by mole which is a number of 1 to 60, $R^{11}$ representing a divalent hydrocarbon group having 2 to 18 carbon atoms or a group represented by $-(R^{13}O)_uR^{13}$- ($R^{13}$ representing an alkylene group having 2 to 4 carbon atoms, and u representing an average number of addition by mole which is a number of 1 to 30), $R^{12}$ representing a divalent hydrocarbon group having 2 to 18 carbon atoms,

and t representing an average number which is 1 to 30; in an amount of 0.3 to 7 parts by mass based on 100 parts by mass of the rubber component of Component (A).

**12.** A pneumatic tire which uses a rubber composition described in Claim 1 at a face of a tread portion which is substantially brought into contact with road surfaces.

**13.** A pneumatic tire according to Claim 12, wherein an expansion ratio of a rubber layer in the tread portion which is substantially brought into contact with road surfaces is 3 to 50%.

**Patentansprüche**

**1.** Kautschukzusammensetzung, die geschlossene Zellen aufweist und (A) mindestens eine Kautschukkomponente ausgewählt unter Naturkautschuk und synthetischen Kautschuke auf Dienbasis, (B) Siliciumdioxid in einer Menge von 10 bis 150 Massenteilen, auf 100 Massenteile der Kautschukkomponente bezogen, (C) eine organische Faser in einer Menge von 0,02 bis 20 Massenteilen, auf 100 Massenteile der Kautschukkomponte bezogen, und (D) ein Silankopplungsmittel, das durch folgende allgemeine Formel (I)

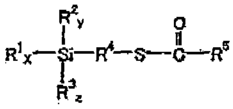 ... (I)

dargestellt ist, wobei $R^1$ eine Gruppe darstellt, die durch $R^6O$-, $R^6C(=O)O$-, $R^6R^7C=NO$-, $R^6R^7NCO$-, $R^6R^7N$- oder $-(OSiR^6R^7)_m(OSiR^5R^6R^7)$ dargestellt ist (wobei $R^6$ und $R^7$ jeweils unabhängig ein Wasserstoffatom oder eine einwertige Kohlenwasserstoffgruppe, die 1 bis 18 Kohlenstoffatome aufweist, darstellen und m eine ganze Zahl von 0 bis 10 darstellt), $R^2$ ein Atom oder eine Gruppe, die durch $R^1$ dargestellt ist, ein Wasserstoffatom oder eine einwertige Kohlenwasserstoffgruppe, die 1 bis 18 Kohlenstoffatome aufweist, darstellt, $R^3$ ein Atom oder eine Gruppe, die durch $R^1$ oder $R^2$ dargestellt ist, oder eine Gruppe, die durch $-[O(R^8O)_aH]$ dargestellt ist (wobei $R^8$ eine Alkylengruppe, die 1 bis 18 Kohlenstoffatome aufweist, darstellt und a eine ganze Zahl von 1 bis 4 darstellt) darstellt, $R^4$ eine zweiwertige Kohlenwasserstoffgruppe, die 1 bis 18 Kohlenstoffatome aufweist, darstellt, $R^5$ eine einwertige Kohlenwasserstoffgruppe, die 1 bis 18 Kohlenstoffatome aufweist, darstellt, und x, y und z Zahlen darstellen, die den Beziehungen $x+y+z=3$, $0 \leqq x \leqq 3$, $0 \leqq y \leqq 2$ und $0 \leqq z \leqq 1$ entsprechen; in einer Menge von 1 bis 30 Massen-%, auf die Massenmenge Siliciumdioxid der Komponente (B) bezogen, umfasst,
wobei die Komponente (C)

(F) eine feine Teilchen umfassende organische Faser ist, die (E) feine Teilchen umfasst.

**2.** Kautschukzusammensetzung nach Anspruch 1, wobei die Komponente (F) die Komponente (E) in einer Menge von 5 bis 90 Massenteilen, auf 100 Massenteile eines Rohmaterials bezogen, das die Komponente (C) ausmacht, umfasst.

**3.** Kautschukzusammensetzung nach Anspruch 1, wobei die für die Komponente (C) verwendete Faser einen Durchmesser von 0,01 bis 0,1 mm und eine Länge von 0,5 bis 20 mm aufweist.

**4.** Kautschukzusammensetzung nach Anspruch 1, wobei die für die Komponente (F) verwendete Faser einen Durchmesser von 0,01 bis 0,1 mm und eine Länge von 0,5 bis 20 mm aufweist.

**5.** Kautschukzusatnmensetzung nach Anspruch 1, wobei ein Rohmaterial, das die Komponente (C) ausmacht, ein kristallines Makromolekül ist, das Polyethylen und/oder Polypropylen umfasst und einen Schmelzpunkt von 190 °C oder weniger aufweist.

**6.** Kautschukzusammensetzung nach Anspruch 1, wobei ein Rohmaterial, das die Komponente (F) ausmacht, ein kristallines Makromolekül ist, das Polyethylen und/oder Polypropylen umfasst und einen Schmelzpunkt von 190 °C oder weniger aufweist.

**7.** Kautschukzusammensetzung nach Anspruch 1, wobei die Komponente (E) eine Mohs-Härte von 2 oder mehr und eine derartige Teilchendurchmesserverteilung aufweist, dass der Teilchendurchmesser 10 bis 50 $\mu$m in 80 Masse-

% oder mehr einer Häufigkeit der Verteilung beträgt und einen durchschnittlichen Teilchendurchmesser der feinen Teilchen von 10 bis 30 μm aufweist.

**8.** Kautschukzusammensetzung nach Anspruch 1, wobei eine Häufigkeit bei einem Höchstwert in einer Verteilung des Teilchendurchmessers der Komponente (E) 20 Massen-% oder mehr beträgt.

**9.** Kautschukzusammensetzung nach Anspruch 1, wobei die Komponente (E) ein Seitenverhältnis von 1,1 oder mehr und Kantenabschnitte aufweist.

**10.** Kautschukzusammensetzung nach Anspruch 1, wobei die Komponente (E) unter anorganischen feinen Teilchen und organischen feinen Teilchen ausgewählt wird.

**11.** Kautschukzusammensetzung nach Anspruch 1, die des Weiteren (G) eine Verbindung, die durch die folgende allgemeine Formel (II):

$$HOOC\text{-}CH{=}CH\text{-}COO\text{-}A\text{-}OOC\text{-}CH{=}CH\text{-}COOH \qquad (II)$$

dargestellt ist, wobei A eine Gruppe darstellt, die durch $-R^9O-$, $-(R^{10}O)_s-$, $-CH_2CH(OH)CH_2O-$ oder $-R^{11}OOC-R^{12}-COO-)_tR^{11}O-$ dargestellt ist, wobei $R^9$ eine zweiwertige Kohlenwasserstoffgruppe, die 2 bis 36 Kohlenstoffatome aufweist, darstellt, $R^{10}$ eine Alkylengruppe, die 2 bis 4 Kohlenstoffatome aufweist, darstellt, s eine durchschnittliche Additionszahl Molen entsprechend, wobei es sich um eine Zahl von 1 bis 60 handelt, darstellt, $R^{11}$ eine zweiwertige Kohlenwasserstoffgruppe, die 2 bis 18 Kohlenstoffatome aufweist, oder eine Gruppe, die durch $-(R^{13}O)_uR^{13}-$ dargestellt ist, darstellt (wobei $R^{13}$ eine Alkylengruppe, die 2 bis 4 Kohlenstoffatome aufweist, darstellt, und u eine durchschnittliche Additionszahl Molen entsprechend, wobei es sich um eine Zahl von 1 bis 30 handelt, darstellt), $R^{12}$ eine zweiwertige Kohlenwasserstoffgruppe, die 2 bis 18 Kohlenstoffatome aufweist, darstellt und t eine durchschnittliche Zahl darstellt, die 1 bis 30 beträgt; in einer Menge von 0,3 bis 7 Massenteilen, auf 100 Massenteile der Kautschukkomponente der Komponente (A) bezogen, umfasst.

**12.** Luftreifen, bei dem eine in Anspruch 1 beschriebene Kautschukzusammensetzung an einer Oberfläche eines Laufflächenabschnitts verwendet wird, der im Wesentlichen mit Straßenflächen in Kontakt gebracht wird.

**13.** Luftreifen nach Anspruch 12, wobei ein Dehnungsverhältnis einer Kautschukschicht in dem Laufflächenabschnitt, der im Wesentlichen mit Straβenflächen in Kontakt gebracht wird, 3 bis 50 % beträgt.

## Revendications

**1.** Composition de caoutchouc ayant des alvéoles fermées et comprenant (A) au moins un composant de caoutchouc choisi parmi le caoutchouc naturel et des caoutchoucs synthétiques à base de diène, (B) de la silice en une quantité de 10 à 150 parties en masse basée sur 100 parties en masse du composant de caoutchouc, (C) une fibre organique en une quantité de 0,02 à 20 partie(s) en masse basée sur 100 parties en masse du composant de caoutchouc et (D) un agent de couplage de type silane représenté par la formule générale suivante (I):

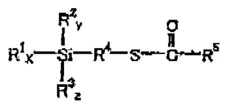 ... (I)

dans laquelle $R^1$ représente un groupe représenté par $R^6O-$, $R^6C(=O)O-$, $R^6R^7C{=}NO-$, $R^6R^7NCO-$, $R^6R^7N-$ ou $-(OSiR^6R^7)_m(OSiR^5R^6R^7)$ ($R^6$ et $R^7$ représentant chacun indépendamment un atome d'hydrogène ou un groupe hydrocarbure monovalent ayant 1 à 18 atome(s) de carbone, et m représentant un nombre entier d'une valeur de 0 à 10), $R^2$ représente un atome ou un groupe représenté par $R^1$, un atome d'hydrogène ou un groupe hydrocarbure monovalent ayant 1 à 18 atome(s) de carbone, $R^3$ représente un atome ou une groupe représenté par $R^1$ ou $R^2$ ou un groupe représenté par $-[O(R^8O)_a-H]$ ($R^8$ représentant un groupe alcylène ayant 1 à 18 atome(s) de carbone, et a représentant un nombre entier d'une valeur de 1 à 4), $R^4$ représente un groupe hydrocarbure divalent ayant 1 à 18 atome(s) de carbone, $R^5$ représente un groupe hydrocarbure monovalent ayant 1 à 18 atome(s) de carbone, et x, y et z représentent des nombres satisfaisant les relations de $x + y + z = 3$, $0 \leqq x \leqq 3$, $0 \leqq y \leqq 2$ 2 et $0 \leqq z \leqq 1$; en une quantité de 1 à 30 % en masse basée sur la quantité en masse de la silice du composant (B),

dans laquelle le composant (C) est

(F) une fibre organique comprenant de fines particules qui comprend (E) de fines particules.

**2.** Composition de caoutchouc selon la revendication 1, dans laquelle le composant (F) comprend le composant (E) en une quantité de 5 à 90 parties en masse basée 100 parties en masse d'une matière première constituant le composant (C).

**3.** Composition de caoutchouc selon la revendication 1, dans laquelle la fibre utilisée pour le composant (C) a un diamètre de 0,01 à 0,1 mm et une longueur de 0,5 à 20 mm.

**4.** Composition de caoutchouc selon la revendication 1, dans laquelle la fibre utilisée pour le composant (F) a un diamètre de 0,01 à 0,1 mm et une longueur de 0,5 à 20 mm.

**5.** Composition de caoutchouc selon la revendication 1, dans laquelle une matière première constituant le composant (C) est une macromolécule cristalline comprenant du polyéthylène et/ou du polypropylène et a un point de fusion de 190°C ou moins.

**6.** Composition de caoutchouc selon la revendication 1, dans laquelle une matière première constituant le composant (F) est une macromolécule cristalline comprenant du polyéthylène et/ou du polypropylène et a un point de fusion de 190°C ou moins.

**7.** Composition de caoutchouc selon la revendication 1, dans laquelle le composant (E) a une dureté de Mohs de 2 ou supérieure et une distribution du diamètre des particules telle que le diamètre de particule est de 10 à 50 μm dans 80 % en masse ou supérieure d'une fréquence de la distribution, et a un diamètre moyen de particule des particules fines de 10 à 30 μm.

**8.** Composition de caoutchouc selon la revendication 1, dans laquelle une fréquence à une valeur pic dans une distribution de diamètre des particules du composant (E) est de 20 % en masse ou plus.

**9.** Composition de caoutchouc selon la revendication 1, dans laquelle le composant (E) a un rapport d'aspect de 1,1 ou supérieur et a des portions présentant une bordure.

**10.** Composition de caoutchouc selon la revendication 1, dans laquelle le composant (E) est choisi parmi des particules inorganiques fines et des particules organiques fines.

**11.** Composition de caoutchouc selon la revendication 1, qui comprend en outre (G) un composé représenté par la formule générale suivante (II) :

$$HOOC\text{-}CH{=}CH\text{-}COO\text{-}A\text{-}OOC\text{-}CH{=}CH\text{-}COOH \qquad (II)$$

dans laquelle A représente un groupe représenté par $-R^9O-$, $-(R^{10}O)_s-$, $-CH_2CH(OH)CH_2O-$ ou $-(R^{11}OOC-R^{12}-COO-)_tR^{11}O-$, $R^9$ représentant un groupe hydrocarbure divalent ayant 2 à 36 atomes de carbone, $R^{10}$ représentant un groupe alcylène ayant 2 à 4 atomes de carbone, s représentant un nombre moyen d'addition en mole qui est un nombre d'une valeur allant de 1 à 60, $R^{11}$ représentant un groupe hydrocarbure divalent ayant 2 à 18 atomes de carbone ou un groupe représenté par $-(R^{13}O)_uR^{13}-$ ($R^{13}$ représentant un groupe alcylène ayant 2 à 4 atomes de carbone, et u représentant un nombre moyen d'addition en mole qui est un nombre de 1 à 30), $R^{12}$ représentant un groupe hydrocarbure divalent ayant 2 à 18 atomes de carbone, et t représentant un nombre moyen d'une valeur de 1 à 30; en une quantité de 0,3 à 7 partie(s) en masse basée sur 100 parties en masse du composant de caoutchouc du composant (A).

**12.** Pneumatique qui utilise une composition de caoutchouc décrite selon la revendication 1, sur une face d'une portion de bande de roulement qui est substantiellement portée au contact des surfaces routières.

**13.** Pneumatique selon la revendication 12, dans lequel un rapport d'expansion d'une couche de caoutchouc dans la portion de bande de roulement qui est substantiellement portée au contact des surfaces routières est de 3 à 50 %.

Fig 1

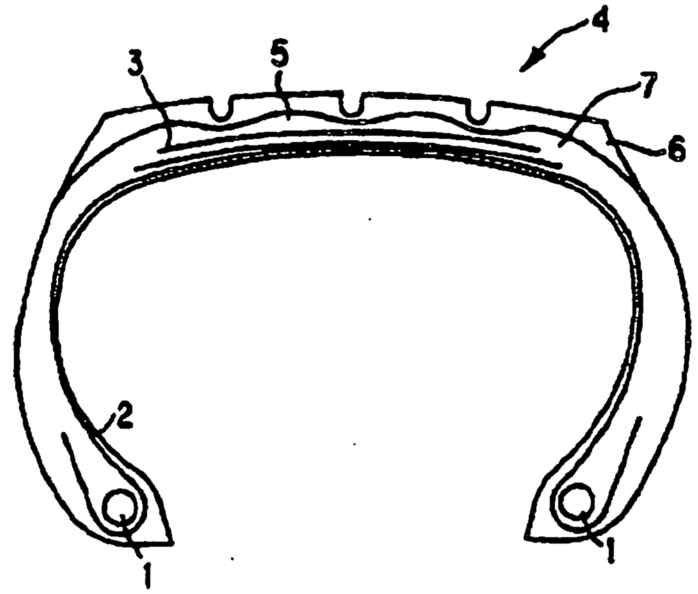

Fig 2

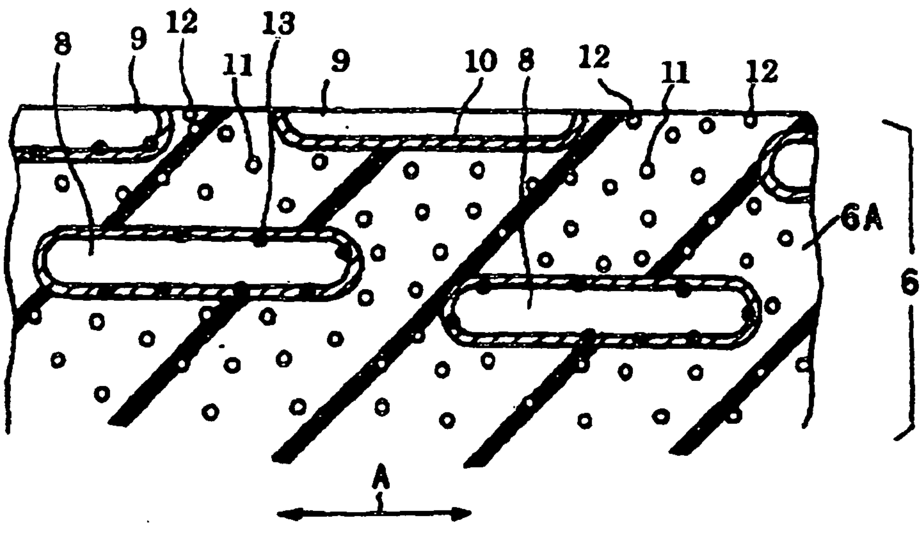


(a)

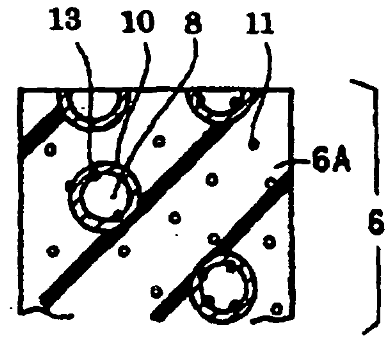


(b)

Fig 3

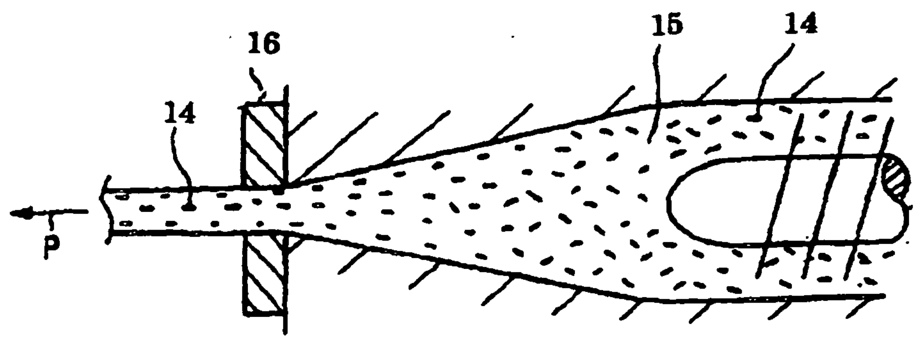

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003201371 A
- JP 2001233993 A
- JP 11071480 A
- JP 2006131714 A
- JP 2006274136 A
- EP 0771836 A
- EP 1048691 A